(19) Europäisches Patentamt
European Patent Office
Office européen des brevets

(11) Publication number: **0 063 528**
**B1**

(12) **EUROPEAN PATENT SPECIFICATION**

(45) Date of publication of patent specification: **19.08.87**

(51) Int. Cl.$^4$: **G 03 G 5/07,** C 08 G 63/68

(21) Application number: **82400721.5**

(22) Date of filing: **22.04.82**

(54) **Condensation polymeric photoconductors containing pendant arylamines, photoconductive compositions and electrophotographic elements containing these photoconductors.**

(30) Priority: **20.07.81 US 285235**
**22.04.81 US 256338**

(43) Date of publication of application:
**27.10.82 Bulletin 82/43**

(45) *Publication of the grant of the patent:*
**19.08.87 Bulletin 87/34**

(84) Designated Contracting States:
**DE FR GB**

(56) References cited:
**EP-A-0 001 835**
**DE-A-2 007 962**
**DE-A-2 917 264**
**FR-A-2 404 019**
**GB-A-1 023 378**
**GB-A-1 227 642**
**US-A-2 744 086**
**US-A-3 954 902**

(73) Proprietor: **EASTMAN KODAK COMPANY**
**343 State Street**
**Rochester New York 14650 (US)**

(72) Inventor: **Noonan, John Michaek**
**418 El Mar Drive**
**Rochester New York 14616 (US)**
Inventor: **Perlstein, Jerome Howard**
**65 Runnymede Road**
**Rochester New York 14618 (US)**
Inventor: **Isaacson, Henry Verschay**
**1260 Holley Road**
**Webster New York 14580 (US)**
Inventor: **Regan, Michael Thomas**
**88 Bent Oak Trail**
**Fairport New York 14450 (US)**

(74) Representative: **Parent, Yves**
**Kodak-Pathé Département Brevets et Licences**
***Centre de Recherches et de Technologie***
**Zone Industrielle**
**F-71102 Chalon-sur-Saone Cédex (FR)**

**EP 0 063 528 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to electrophotographic elements comprising condensation polymeric photoconductors containing arylamine moieties pendant from the polymer backbone.

The process of xerography, as disclosed in U.S. Patent No. 2,297,691, employs an electrophotographic element comprising a support bearing a coating of an insulating material whose electrical resistance varies with the amount of incident electromagnetic radiation it receives during an imagewise exposure. The element, commonly termed a photoconductive element, is first given a uniform surface charge in the dark after a suitable period of dark adaptation. It is then exposed to a pattern of actinic radiation which has the effect of differentially reducing the potential of this surface charge in accordance with the relative energy contained in various parts of the radiation pattern. The differential surface charge, or electrostatic latent image, remaining on the electrophotographic element is then developed by contacting the surface with a suitable electroscopic marking material. Such marking material, or toner, whether contained in an insulating liquid or in a dry developer, is deposited on the exposed surface in accordance with either the charge pattern or discharge pattern depending on the charge polarity of the toner and the surface of the element. Deposited marking material is either permanently fixed to the surface of the sensitive element by means such as heat, pressure, or solvent vapor, or transferred to a second element to which it is similarly fixed. Likewise, the electrostatic charge pattern can be transferred to a second element and developed there.

Various photoconductive insulating materials have been employed in the manufacture of electrophotographic elements. For example, selenium and selenium alloys deposited on a suitable support and particles of photoconductive zinc oxide held in a resinous film-forming binder have found wide application in present-day, document-copying processes.

Since the introduction of electrophotography, many organic compounds, both monomers and polymers, have been evaluated for their photoconductive properties. As a result, a large number of organic compounds are known to possess some degree of photoconductivity. Many of the organic compounds exhibit useful levels of photoconduction and have been incorporated into photoconductive compositions. Included among the known organic photoconductive materials are triarylamine polymeric photoconductors as disclosed in U.S. Patent Nos. 4,025,341; 4,092,162; and 3,779,750. In these polymers, the triarylamine groups are divalently included directly in the polymer backbone.

British Patent 1,227,642 describes polyester resins containing tertiary amines, in some cases pendant diarylamines, but does not indicate whether they have any photoconductive properties or any utility in electrophotographic elements.

It is also known that photoconductive compositions can be made water-dispersible by combining a photoconductor with an ionizable material. U.S. Patent No. 3,471,625, for example, discloses a two-component water-dispersible photoconductive composition comprising a photoconductor and a film-forming addition polymer having ester, hydroxyl or carboxyl groups to render the polymer water soluble at an alkaline pH.

There are problems, however, associated with the use of prior art ionizable materials in photoconductor compositions. For example, in the initial step of a copy process wherein a photoconductive composition is given a uniform charge, the ionizable material often interacts undesirably with the imposed charge. Either the photoconductor cannot be charged to a sufficiently high level to be useful, or the charge dissipates excessively in the dark from the photoconductor surface. Furthermore, although the use of ionizable materials in photoconductive compositions can provide water solubility or dispersibility, such materials do so in many instances at the sacrifice of solubility of the composition in organic solvents. Accordingly, the successful use of ionizable materials is unpredictable and has been limited to the use of specific classes of polymers and separate photoconductors as set forth in U.S. Patent Nos. 3,704,122 and 3,471,625.

The present invention provides an electrophotographic element comprising an electrically conducting support and a photoconductive layer in electrical contact with the support. The photoconductive layer comprises a condensation polymer containing, as repeating units, the condensation residues of:

a) at least a diacid, and

b) at least an organic difunctional compound capable of undergoing condensation polymerization with said diacid,

wherein at least one of said residues contains an appended arylamine photoconductor group. These polymeric compounds are able to function as photoconductors, and readily accept an electrostatic charge without excessive dissipation in the dark.

In accordance with the present invention, the condensation polymers are optionally ionic and in such an embodiment contain, as repeating units, the condensation residues of:

a) a first diacid,

b) a second diacid containing an anionic iminodisulfonyl or sulfo group, and

c) at least one organic difunctional compound capable of undergoing condensation polymerization with said first and second diacids,

wherein at least one of said first diacid and organic difunctional compound residues contains said appended arylamine photoconductor group.

The spectral response of the elements of the invention can be modified through the use of spectral sensitizing dyes, such as pyrylium dyes.

The present arylamine-containing polymers exhibit exceptionally high degrees of photoconductivity so that, in some instances, photoconductivity is provided without the need of sensitizers.

The ionic iminodisulfonyl or sulfo groups do not inhibit the ability of the polymer otherwise to function as a photoconductor. That is, the ionic photoconductive polymer in the dark, readily accepts and retains useful levels of electrostatic charge, and readily dissipates such charge upon exposure to actinic radiation energy. Furthermore, the present ionic polymers are readily rendered water-dispersible without sacrificing the dispersibility of the polymers in non-aqueous solvents. These ionic polymers, moreover, when formulated into a photoconductive layer in an element, are capable of excellent image resolution.

Polymeric photoconductor compounds of the present invention are represented by the structural formula:

I

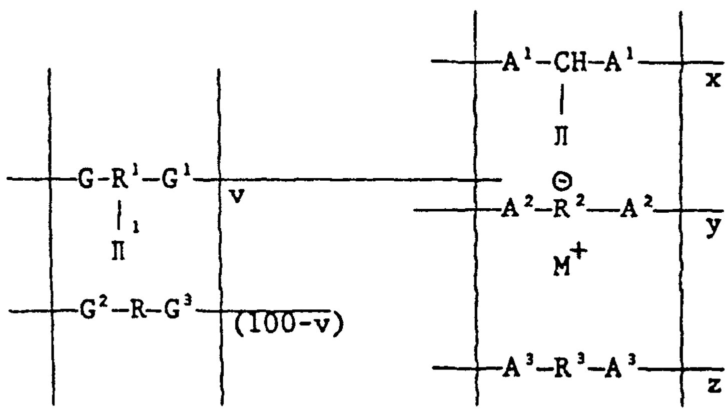

wherein Π and $Π^1$, which are the same or different, are organic groups containing an arylamine which confers photoconductivity upon polymer I; $R^1$—$Π^1$ together with G and $G^1$ represents an organic condensation residue of a difunctional compound capable of undergoing condensation with organic diacids; R together with $G^2$ and $G^3$ represents the organic condensation residue of at least one difunctional compound capable of undergoing condensation with organic diacids; G and $G^1$, which are the same or different, and $G^2$ and $G^3$, which are the same or different, represent —O— or —NH—; $A^1$, $A^2$ and $A^3$, which are the same or different, represent the residue of acid groups such as

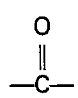 or 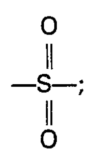;

$R^{28}$ is an organic group which contains an anionic iminodisulfonyl or sulfo group; $M^+$ is a cation such as ionic sodium, lithium, ammonium, phosphonium, potassium or hydrogen; —$A^3$—$R^3$—$A^3$— represents an organic diacid condensation residue; x is 0 to 100 mole percent of the total diacid content; y is 0 to 35 mole percent of the total diacid content, and z is 0 to 100 mole percent of the total diacid content; the sum of x, y and z is 100; v is 0 to 100 mole percent of the total difunctional compound content; and v+x is at least 20.

As indicated by formula I, Π and $Π^1$ represent organic groups containing a monovalently appended arylamine photoconductor. Representative examples of Π and $Π^1$ include alkylenearylamine monovalently appended groups corresponding to the structure:

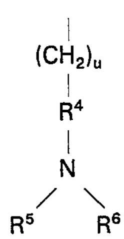

wherein u is an integer from 1 to 6, preferably 1, and $R^5$ and $R^6$ are the same or different and represent alkyl, cycloalkyl, aryl or aralkyl and $R^4$ represents alkylene, cycloalkylene, arylene or arylenealkylene, with the proviso that at least one of $R^4$, $R^5$ and $R^6$ comprises an aromatic group appended to the nitrogen atom.

Preferred aryl and arylene groups include phenyl, tolyl, phenylene and tolylene. Preferably, $R^4$, $R^5$ and $R^6$ are each aromatic.

In those instances when the arylamine photoconductor group is provided by repeating units of a difunctional compound capable of undergoing condensation with organic diacids, the polymeric photoconductors of the present invention comprise one or more recurring units containing $R^1—\Pi^1$ in structure I above. $R^1—\Pi^1$ together with G and $G^1$ represents the arylamine-containing condensation residue of an organic difunctional compound remaining after condensation with an organic diacid or functional equivalent of a diacid. $R^1$ is therefore a $\Pi^1$-substituted organic radical having from 2 to 40 carbon atoms, including optionally non-carbon atoms. Exemplary $R^1$ radicals include $\Pi^1$-substituted hydrocarbon radicals, such as straight or branched chain alkylene radicals (e.g., ethylene, trimethylene, 2,2-dimethyl-1,3-propylene, etc.), cycloalkylene radicals (e.g., cyclohexylene, cycloheptylene, etc.); arylene radicals (e.g., phenylene); and hydrocarbon-oxy-hydrocarbon radicals, such as alkyleneoxy-alkylene and alkylene-oxy-cycloalkylene-oxy-alkylene.

Polymers according to Structure I also can contain the recurring unit

$$+G^2—R—G^3+$$

the condensation residue of at least one difunctional compound capable of undergoing condensation with organic diacids. R is generally, therefore, an organic radical having from 2 to 40 carbon atoms, including optional non-carbon atoms. Exemplary radicals include hydrocarbon radicals, such as straight or branched chain alkylene radicals (e.g., ethylene, trimethylene, 2,2-dimethyl-1,3-propylene, etc.), cycloalkylene radicals (e.g., cyclohexylene, cycloheptylene, etc.), and arylene radicals (e.g., phenylene); and hydrocarbon-oxy-hydrocarbon radicals, such as alkylene-oxy-alkylene and alkylene-oxy-cycloalkylene-oxy-alkylene.

Representative $R^2$ groups containing the anionic iminodisulfonyl group

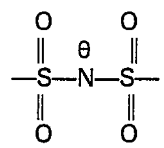

or the anionic sulfo group

$$—SO_3^{\ominus}$$

include one or more groups corresponding to the following structures:

II

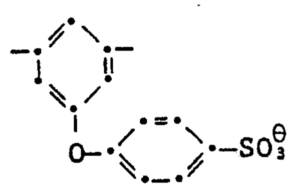

III

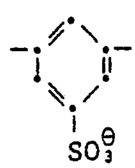

IV

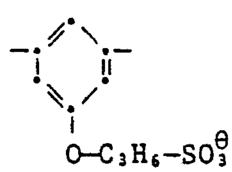

V

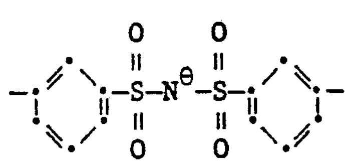

VI

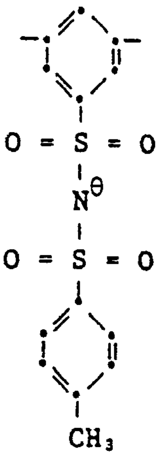

VII

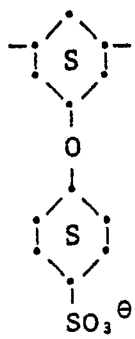

VIII

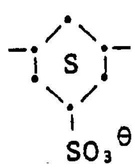

Polymeric photoconductors defined herein comprise, when desired, additional repeating units for any desired purpose such as varying solubility, charge control, compatibility with other components, adhesion and toughness. Accordingly, the present polymers include optional repeating units represented, for example, by

$$-\!\!\!+A^3—R^3—A^3+\!\!\!-$$

in formula I which signifies one or more organic diacid condensation residues. Accordingly, representative $R^3$ groups include unsubstituted and substituted alkylene, arylene, arylenecarbonylarylene, arylenesulfonylarylene, arylenealkylene, cycloalkylene, heterocyclic groups and ethylenically unsaturated groups.

Preferred polyester photoconductors are provided comprising condensation polymers containing, as repeating units, the condensation residues of:

a) at least a dicarboxylic acid, and

b) at least an organic diol capable of undergoing condensation polymerization with said dicarboxylic acid, wherein at least one of said residues contains an appended arylamine photoconductor group.

The arylamine-containing polyesters are optionally ionic and contain in this embodiment, as repeating units, the condensation residues of:

a) a first dicarboxylic acid,

b) a second dicarboxylic acid containing an anionic iminodisulfonyl or sulfo group, and

c) at least one organic diol capable of undergoing condensation polymerization with said first and second dicarboxylic acids,

wherein at least one of said first dicarboxylic acid and organic diol residues contains an appended arylamine photoconductor group.

Polyester photoconductors of the present invention are accordingly represented by the structural formula:

IX

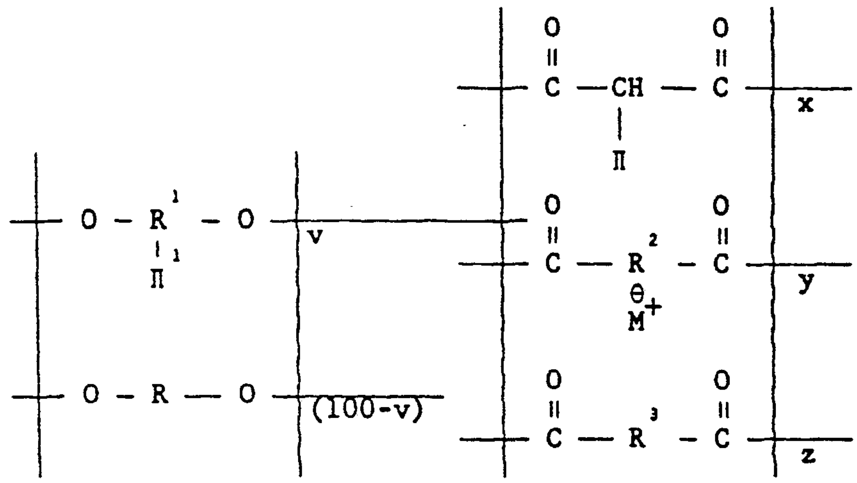

wherein R, $R^1$, $R^2$, $R^3$, $M^+$, Π, $Π^1$, x, y, z and v are as defined with respect to structure I above.

In the preferred polyesters according to the present invention, the second dicarboxylic acid units, designated in structure IX as,

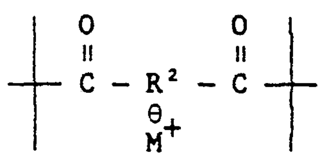

can comprise residues of various conventional dicarboxylic acids such as phthalic acids, isophthalic acids, terephthalic acids and cyclohexanedicarboxylic acids. Bis-benzoic acids comprising benzoic acid moieties linked symmetrically about other groups such as iminodisulfonyl anionic groups are also advantageously employed. In each instance, of course, the repeating unit contains an anionic iminodisulfonyl or sulfo group and the $M^+$ counterion.

Preferred dicarboxylic acids having an anionic iminodisulfonyl group include 3,3′-[(sodioimino)-disulfonyl]dibenzoic acid; 3,3′-[(potassioimino)disulfonyl]dibenzoic acid; 3,3′-[(lithioimino)disulfonyl]-dibenzoic acid; 4,4′-[(lithioimino)disulfonyl]dibenzoic acid; 4,4′-[(sodioimino)disulfonyl]dibenzoic acid; 4,4′-[(potassioimino)disulfonyl]dibenzoic acid; 3,4′-[(lithioimino)disulfonyl]dibenzoic acid; 3,4′-[(sodio-imino)disulfonyl]dibenzoic acid; 4,4′[(potassiomino)disulfonyl]dinaphthoic acid; 5-[N-potassio-N-(4-tolyl-sulfonyl)sulfamoyl]isophthalic acid and functional derivatives thereof. These and other dicarboxylic acids are disclosed in U.S. Patents 3,546,180 and 3,929,489.

Preferred dicarboxylic acids having an anionic sulfo group include 5-sodiosulfoisophthalic acid, 5-(4-sodiosulfophenoxy)isophthalic acid; 5-(3-sodiosulfopropoxy)isophthalic acid; 5-sodiosulfo-1,3-cyclohexanedicarboxylic acid and 5-(4-sodiosulfocyclohexyloxy)-1,3-cyclohexanedicarboxylic acid and functionally equivalent derivatives thereof.

Considering all components, in a preferred photoconductive polyester according to formula IX above, Π contains triphenylamine or di-p-tolyl-phenylamine,

$$+O—R—O+$$

is derived from an organic diol selected from the group consisting of alkylenediol, di(hydroxyalkyl)cyclohexane and di(hydroxyalkoxy)cyclohexane;

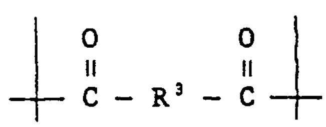

is derived from an aromatic dicarboxylic acid such as phthalic acid, isophthalic acid or terephthalic acid; and

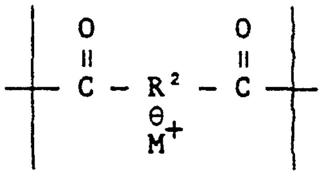

comprises either an anionic iminodisulfonyl or anionic sulfo group linked to the residue of an organic dicarboxylic acid selected from the group consisting of phthalic acids, isophthalic acids, terephthalic acids, bis(benzoic acids) or cyclohexanedicarboxylic acids; and x is from 20 to 65 mole percent, z is 0 to 70 mole percent, y is from 10 to 35 mole percent, and v is 0.

Polymers pursuant to the present invention are readily dispersible in common solvents such as dichloroethane. In certain of the preferred polyesters water-dispersibility is provided by employing a molar percentage (y in polyester IX) of the ionic diacid repeating unit that is sufficient to confer water-dispersibility on polyester IX. In this regard, water-dispersibility signifies that the resulting polyester will form a stable aqueous composition comprising a dispersion or solution containing at least 3 weight percent of the polyester for at least two months, usually six months or more, with essentially no visible signs of agglomeration or crystallization. Preferred water-dispersible photoconductive polyesters of the present invention that form such aqueous compositions correspond to structure IX wherein y is from 10 to 30, and x is from 40 to 60, and v is 0.

As shown in connection with structure I above, Π and $Π^1$ groups containing arylamine photoconductive groups are appended to a diacid residue or difunctional organic compound residue in the defined photoconductive polymers. Such arylamine groups are attached to the diacid side of the polymer, for example, by basic condensation of an arylamine having an aldehyde substituent with an active methylene of a diacid radical to produce an unsaturated bond joining the photoconductor to the diacid radical. The unsaturated bond is thereafter reduced by hydrogenation over a palladium/charcoal catalyst. Schematically, the preparation of the arylamine-containing group is shown as follows:

(i)

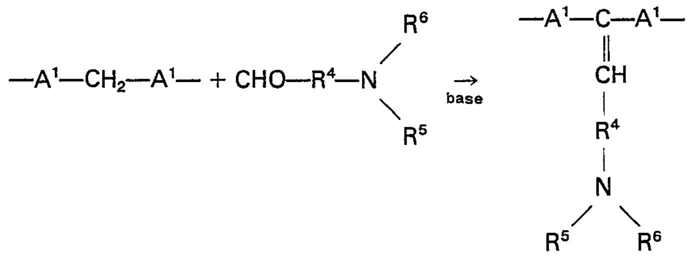


(A)

wherein $A^1$, $R^4$, $R^5$ and $R^6$ are defined above.

(ii)

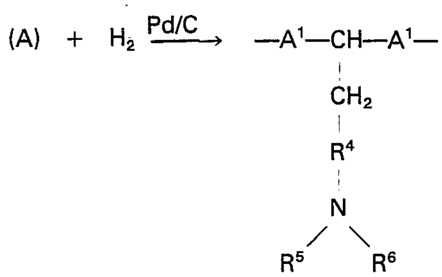


The arylamine photoconductor group is attached to the diacid precursor of the defined polymer followed by polycondensation of the diacid component with the other appropriate condensation polymer components. Alternatively, the arylamine is attached to the diacid component of a preformed polymer. The alternative method is preferred in the event that high molecular weight polymers are desired.

When it is desirable to append the arylamine to a difunctional organic compound, particularly a diol, that is capable of undergoing condensation polymerization with the diacid precursors in the defined polymers, dicarboxylic acids containing the pendant arylamine are chemically reduced to yield the corresponding diol. Attachment of the arylamine to organic diamines or hydroxyamines can be carried out by known techniques such as by attaching the arylamine to an organic compound already having the amine or hydroxyamine functionality. Alternatively, an arylamine can be treated to form the diamine or hydroxyamine functionality.

The polymers described herein, with or without pre-attached arylamine photoconductive groups, are prepared by procedures well known in the art for making linear condensation polymers, particularly interfacial, solution or ester interchange procedures, the latter being preferred for polyesters. Reaction times are governed by the inherent viscosity desired for the resulting polymer. For purposes of illustration, exemplary procedures for the preparation of polyesters (Structure IX) are described hereinafter.

When employing interfacial procedures, polymerization is carried out in suitable halogenated solvents, such as methylene chloride, chloroform, dichloroethane, or propylene dichloride. Reaction temperatures are governed by maintenance of a practical rate of reaction and the boiling point of the solvent, with a range of 10° to 40°C being suitable.

Solution polymerization procedures can be carried out by condensing suitable acid halides, such as terephthaloyl, isophthaloyl, or cyclohexane-dicarboxylic acid chlorides, with the desired diols in a suitable solvent, in the presence of a suitable acid acceptor, such as pyridine, triethylamine, or tripropylamine. The acid acceptor can be employed in excess to serve as the solvent.

A preferred mode of preparing the polyesters disclosed herein is the ester interchange procedure either by melt or powder process, and preferably by the melt process. The diols and the carboxylates are heated to a melt on an approximately equal molar basis and treated with a trans-esterification catalyst such as alkali or alkaline earth metal carbonates, oxides, hydroxides, hydrides, and alkoxides; or compounds of a Group IVB metal of the Periodic Table, such as tetraisopropyl orthotitanate, butyl titanate, organometallic halides, and complex alkoxides such as $NaHTi(OC_4H_9)_2$. As a practical matter, it is frequently desirable to utilize an excess of up to 80 molar percent of the diol component in the reaction mixture. Low boiling alcohols are removed by distillation during polymerization.

The condensation polymers described herein exhibit an inherent viscosity of from 0.10 to 0.50 and preferably from 0.1 to 0.4 as measured at 25°C at a concentration of 0.25 g/deciliter in a 1:1 mixture of phenol and chloro- benzene.

The polymers described herein have a glass transition temperature within the range of 30°C to 90°C as determined by differential scanning colorimetry as disclosed in "Techniques and Methods of Polymer Evaluation", Vol. 2, Marcel Dekker, Inc., N.Y., 1970.

The structures of representative photoconductive polyesters containing appended arylamine photoconductors as described herein are shown in Table I below (mole percentages set forth by parenthesis indicate a separate polymer of the structure shown):

TABLE I

1

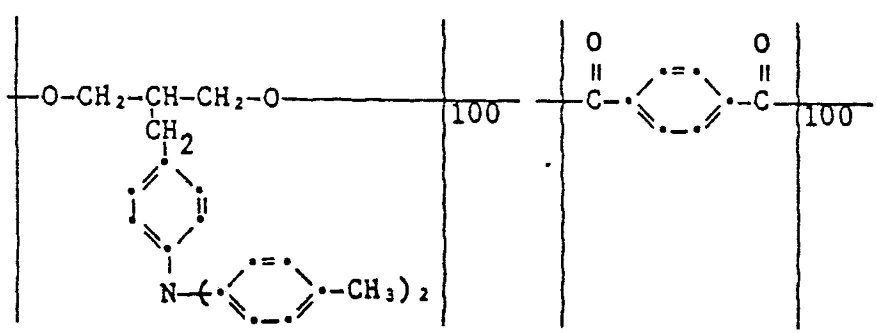

TABLE I Continued

2

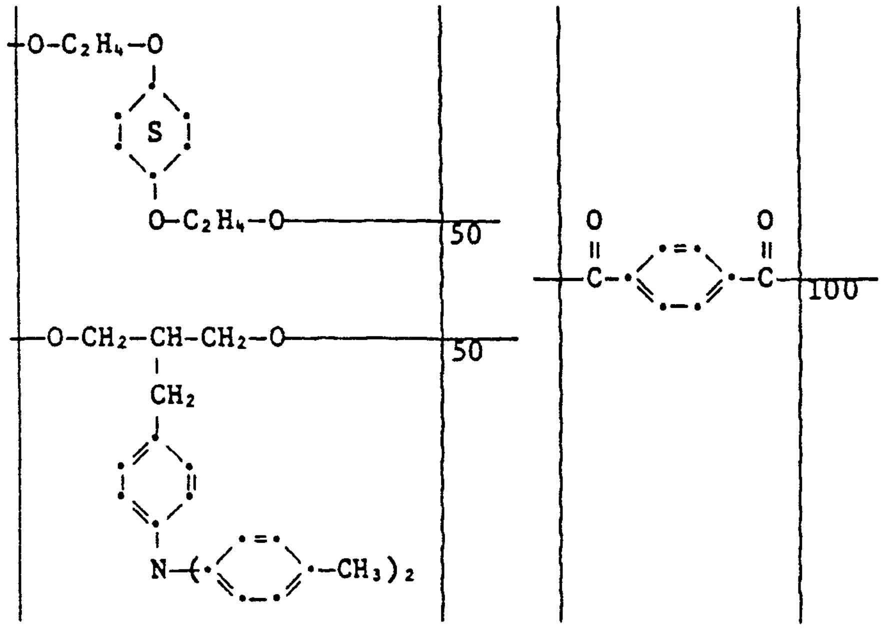

3

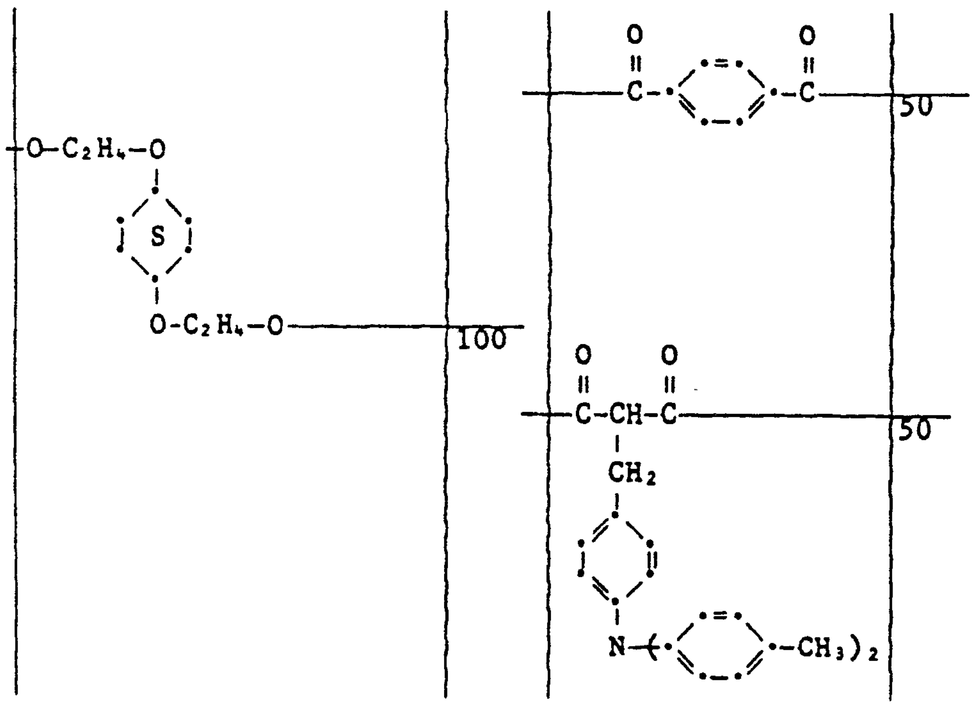

TABLE I Continued

| | | | | |
|---|---|---|---|---|
| 4 | 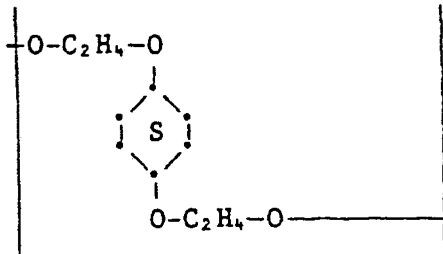 | 100 | 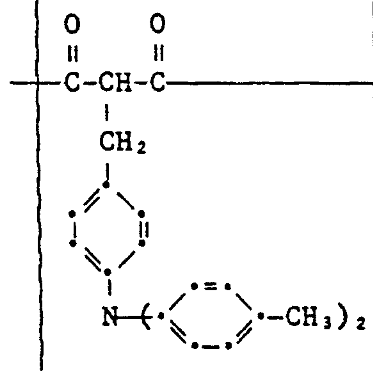 | 100 |
| 5, 6 | 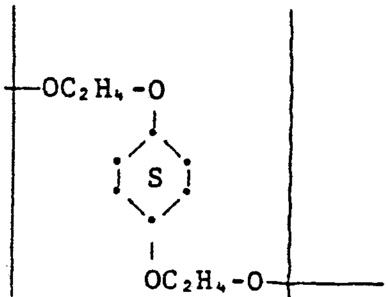 | 100 (100) | 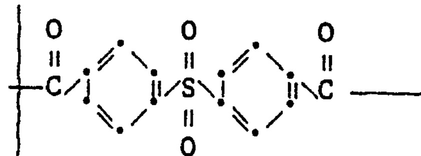 | 45 (25) |
| | | | 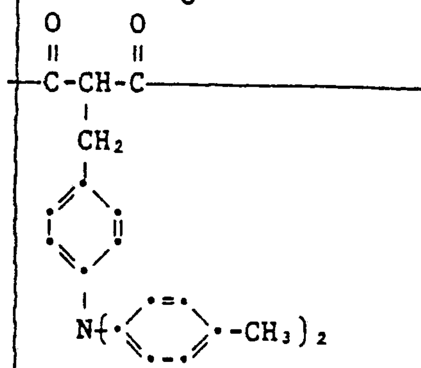 | 40 (60) |
| | | | 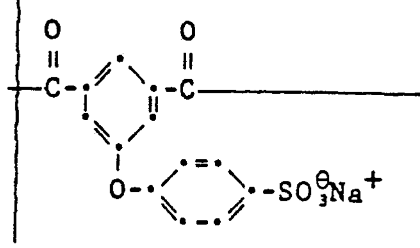 | 15 (15) |

TABLE I Continued

7, 8, 8a

| | | | |
|---|---|---|---|
| 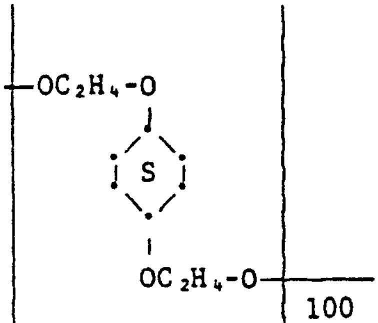 | 100<br>(100)<br>(100) | 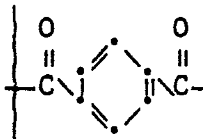 | 30<br>(45)<br>(0) |
| | | 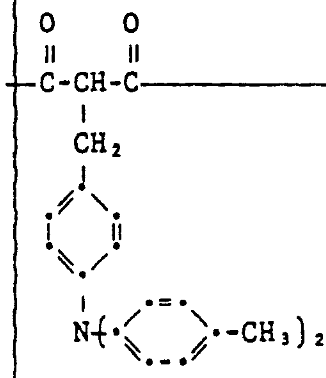 | 40<br>(40)<br>(90) |
| | | 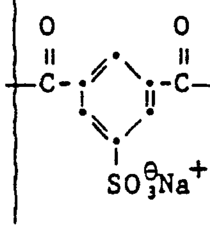 | 30<br>(15)<br>(10) |

9, 10, 11, 12

| | | | |
|---|---|---|---|
| 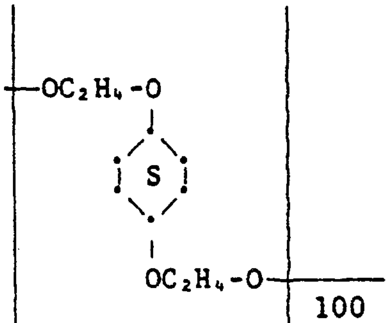 | 100<br>(100)<br>(100)<br>(100) | 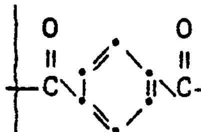 | 45<br>(25)<br>(25)<br>(25) |
| | | 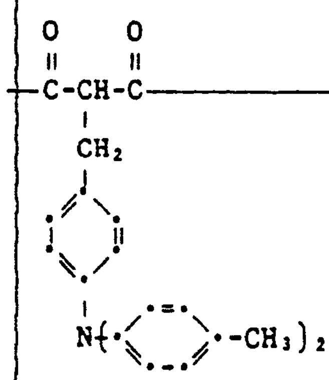 | 40<br>(60)<br>(50)<br>(55) |
| | | 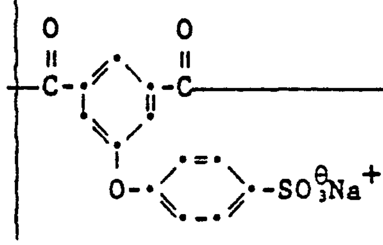 | 15<br>(15)<br>(25)<br>(20) |

TABLE I Continued

13

| | | | |
|---|---|---|---|
| 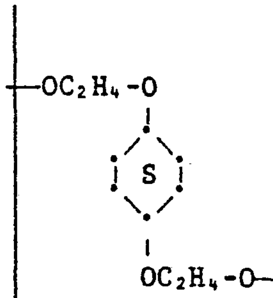 | 100 | 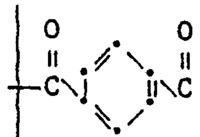 | 45 |
| | | 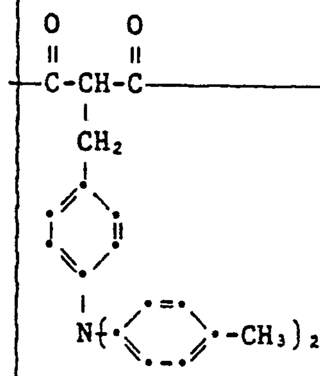 | 40 |
| | | 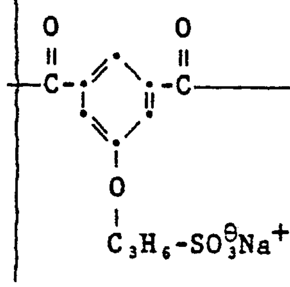 | 15 |

14, 14a

| | | | |
|---|---|---|---|
| 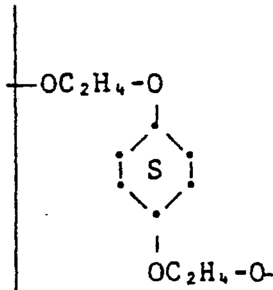 | 100 (100) | 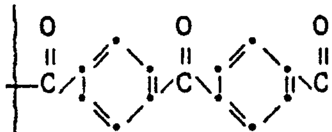 | 45 (0) |
| | | 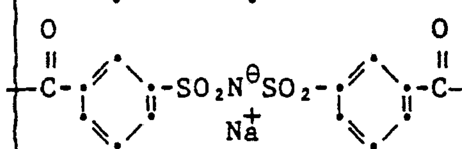 | 15 (10) |
| | | 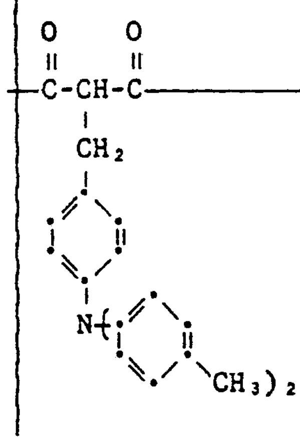 | 40 (90) |

TABLE I Continued

15

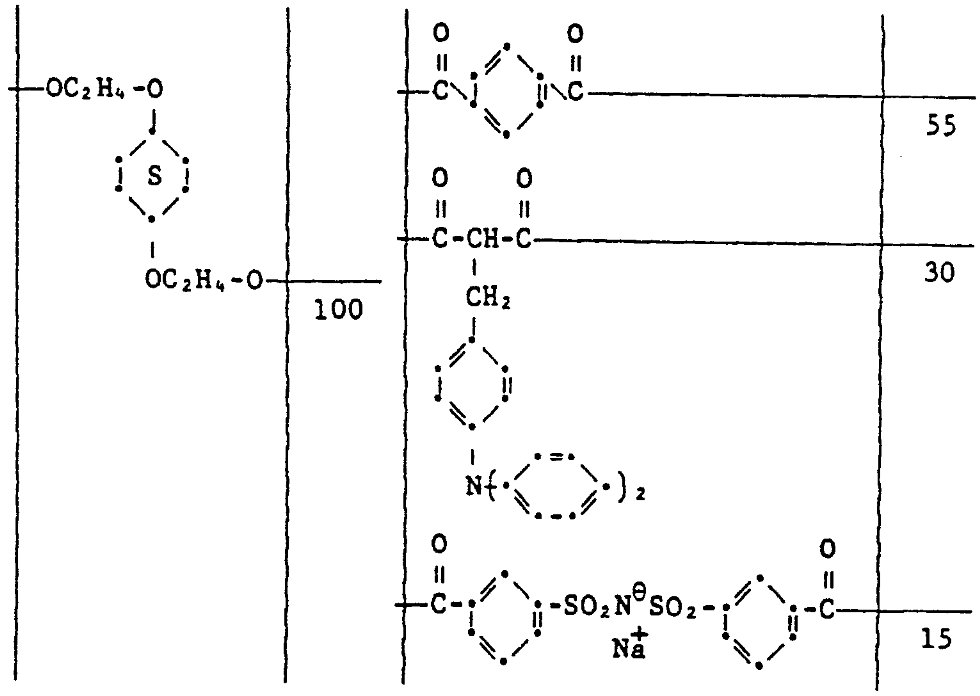

100 55 30 15

16

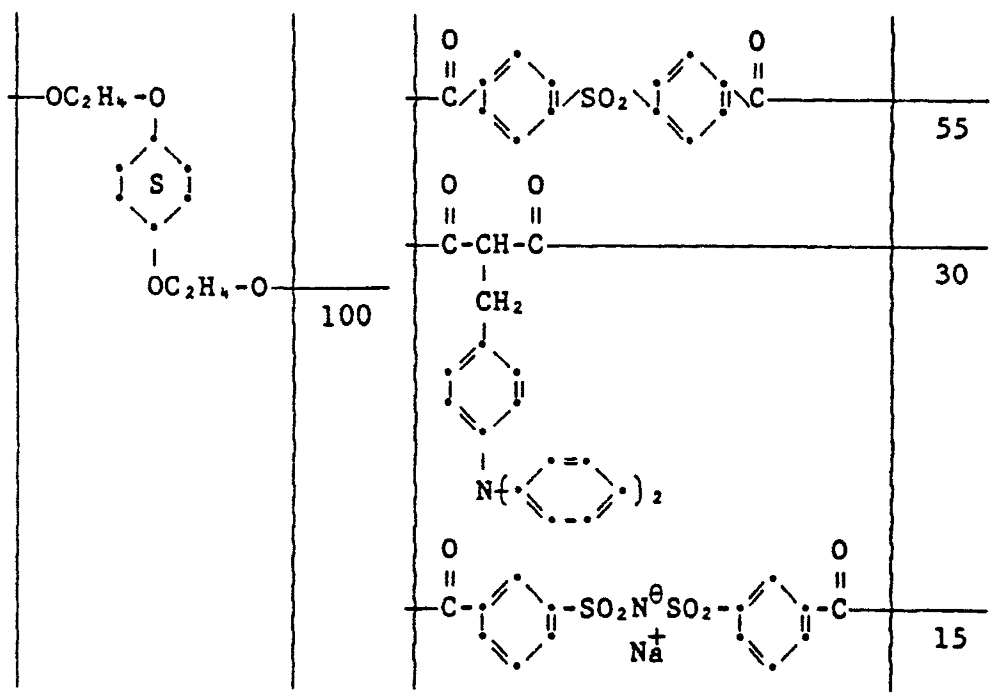

100 55 30 15

TABLE I Continued

17

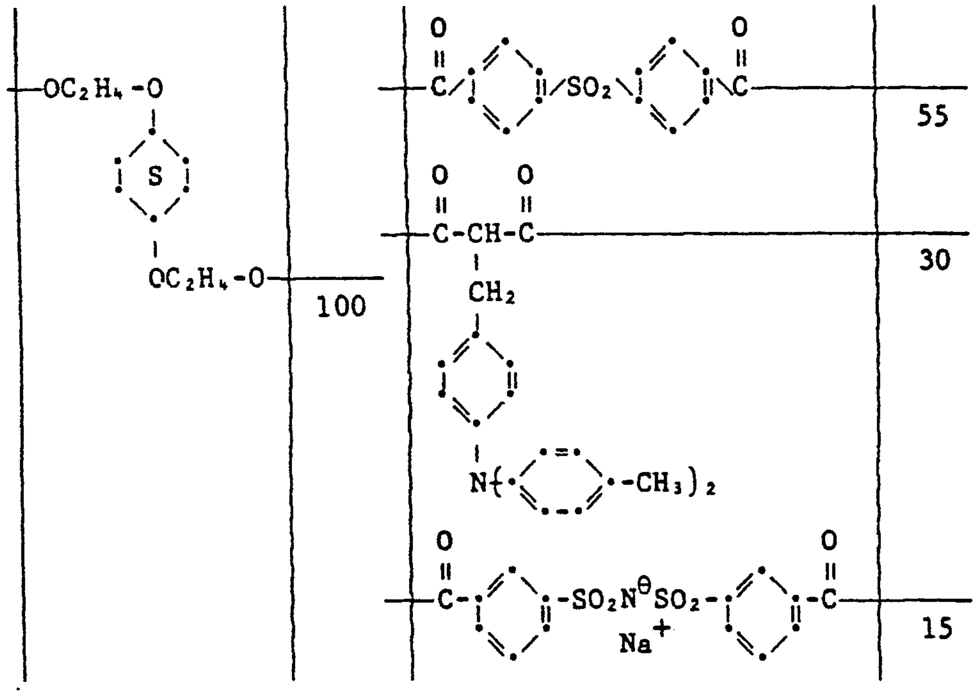

100

55

30

15

18

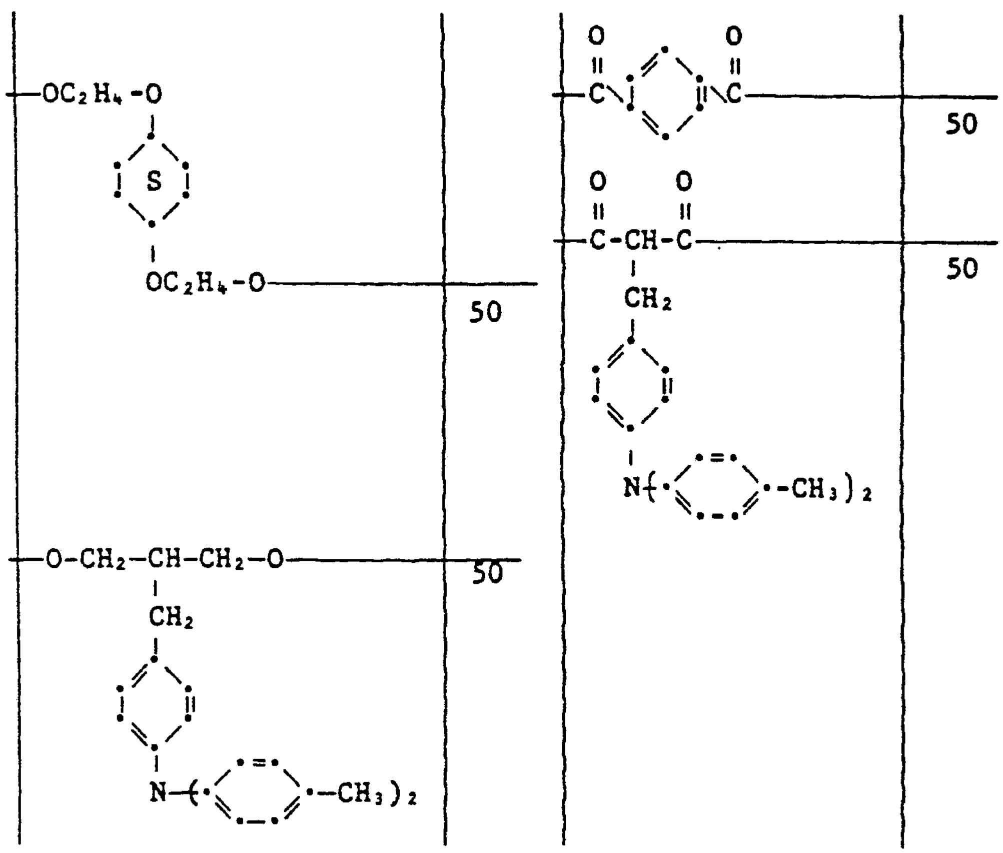

50

50

50

50

The utility of the present polymeric photoconductors extends to those areas in which a photoconductive component is desirable such as in electrophotography. In electrophotography, compositions comprising the polymeric photoconductors are applied as layers to electroconducting supports to form electrophotographic elements. Alternatively, layers containing the present polymeric photoconductors can be employed to form multilayer electrophotographic elements with or without additional layers containing other photoconductors. In such multilayer elements (often referred to as multi-active elements) one photoconductor layer functions as a charge generation layer while a second photoconductor layer functions as a transport layer for the generated charge. The present polymeric photoconductors are useful in such charge generation or charge transport layers.

The polymeric photoconductive materials of the invention are employed in photoconductive compositions and layers with or without a separate binder and with or without sensitizing addenda and/or additional optional photoconductors. Generally, because of the film-forming properties of a polymeric material, a binder is not required.

In preparing the coating composition useful results are obtained where the photoconductor substance is present in an amount equal to at least about 1 weight percent of the coating composition (on a solvent-free basis). The upper limit in the amount of photoconductor substance present is not critical.

The following procedures and examples are provided to illustrate the preparation and utility of polymeric photoconductors of the present invention.

Polymerization Procedure

All of the polymers described in Table I can be synthesized by the standard high temperature melt condensation procedure described below. Polyesters are described for purposes of illustration.

A polymerization flask was charged with the appropriate diols and diesters. The flask was equipped with a Vigeaux condenser. The condenser was fitted with a nitrogen inlet tube and gas flushed through the system at 40 ml/min. The flask was immersed in a 235°C salt bath to just below the stoppered side arm. When the chemical mixture became a homogeneous melt, one drop of tetraisopropyl orthotitanate was added as a catalyst.

The volatiles were distilled at 235°C and at atmospheric pressure for 4 hours. The condenser and inlet tube were replaced with a stainless steel stirrer attached so as to be vacuum tight. A vacuum was drawn to 6.65 Pa, the polymer stirred at 200 rpm and the torque applied by the melt to the stirrer measured. When the torque indicated the desired degree of polymerization, the stirring and vacuum were stopped and the polymerization flask removed from the bath as quickly as possible. The polymerization flask was immersed in liquid nitrogen and the flask broken away from the solidified glassy polymer.

Condensation of the Malonate-Containing Polymers with the Arylamines Containing an Aldehyde Substituent

This illustrates the attachment of the arylamine photoconductive group to a preformed polyester. The preparation of polyester 16 in Table I is described to exemplify this method. Polyesters 15 and 17 were also prepared by this method with appropriate modification of the reactants set forth below.

A one-liter, three-necked, round-bottom reaction flask equipped with a stirrer, thermometer, and condenser was charged with 27.7 g of polymer 19 below and 300 ml of dry 1,2-dichloroethane.

19

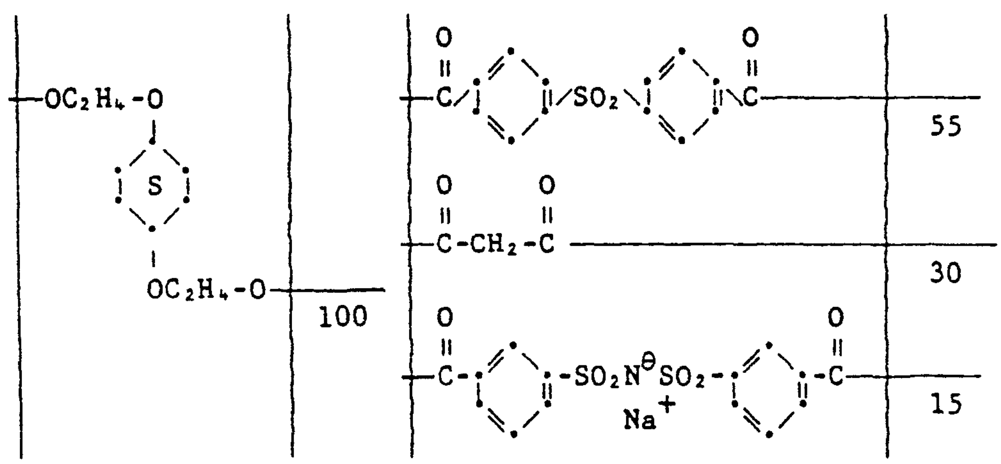

In 50 ml of dry 1,2-dichloroethane was dissolved 5.33 g of diphenylaminobenzaldehyde. The latter solution and 0.1 g of piperidine were added to the reaction flask. After thorough mixing, 2 g of 4A molecular sieves were added, and the reaction was stirred for four days. The reaction mixture was filtered and the 1,2-dichloroethane was evaporated leaving a polymeric residue. The residue was extracted with acetonitrile to eliminate unreacted diphenylaminobenzaldehyde. The yield was 18.8 g of polyester 16.

Condensation of Diethyl Malonate with a Triarylamine containing an Aldehyde Substituent

This illustrates the attachment of the triarylamine photoconductive group to a malonate diacid. The resulting malonate-photoconductor diacid was then polymerized as described above with appropriate glycols and other diacids to produce polyesters 5—14a in Table I.

A five-liter, three-necked, round-bottom flask equipped with stirrer, thermometer, Dean Stark trap, and condenser was charged with 391.8 g of di-p-tolylaminobenzaldehyde, 208 g of diethyl malonate, 11 ml of piperidine, 13 ml of acetic acid, and 1500 ml of toluene. The reaction solution was refluxed for 6 hours, and during this time 32 ml of water was collected. The reaction was cooled and the toluene was evaporated. The product was taken up in 900 ml of ethanol, and the ethanol was slowly reduced in volume by evaporation. The crystalline product was collected, and had a melting point of 99°—105°C. The product was recrystallized again from ethanol, dried, and had a melting point of 104°—106°C. The yield was 494 g. The condensation product, diethyl 4-[N,N-di-p-tolylamino]benzylidenemalonate, was reduced using palladium over charcoal as the catalyst.

Examples 1—3

These examples illustrate the solvent coating of ionic polyesters of the present invention to form photoconductive layers on a conductive film support and the resulting photodischarge characteristics of the photoconductive layers.

The ionic polyester 6 from Table I was dissolved in tetrahydrofuran (THF) at 20% solids. The solution was coated onto 0.4 O.D. (optical density) nickel-coated poly(ethylene terephthalate) support to give a dry coating of approximately 6.5 µm thick. Another solution was prepared and coated as above, except 0.5% of the following sensitizer was added:

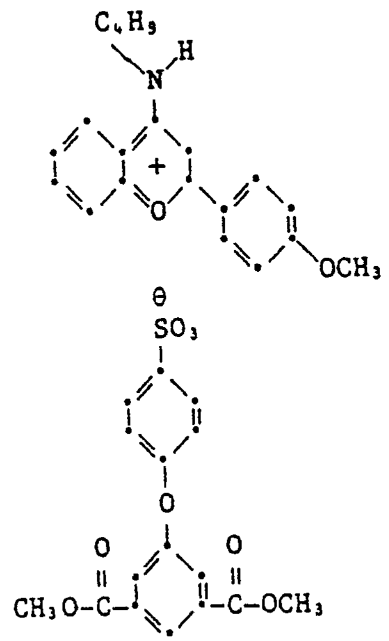

A third solution was prepared and coated as above except polyester 10 replaced polyester 6 to a coating thickness of 7 µm, and dichloroethane replaced THF as solvent.

The resulting photoconductive layers were charged to an initial charging potential ($V_o$), exposed to a 350 nm monochromatic light source, and the photodischarge measurements of the layers were determined as the number of ergs/cm$^2$ required to dissipate the charge to 1/2 $V_o$.

The results of the photodischarge measurements are listed in Table II.

TABLE II

Photodischarge Sensitivity of
Sensitized Ionic Polyester Photoconductors
(Positive Charging-Front Surface Exposure)

| Example | Polymeric film | Charging Potential, Vo (volts) | Photodischarge to 1/2 $V_o$ at $\lambda = 350$ nm [ergs/cm$^2$] |
|---|---|---|---|
| 1 | Polyester 6 | +441 | 56 |
| 2 | Polyester 6 + sensitizer | +375 | 33 |
| 3 | Polyester 10 | +500 | 98 |

Examples 4—8

These examples demonstrate the aqueous coating of ionic polyesters of the present invention to form photoconductive layers on a film support and the resulting electrical properties (positive or negative charging modes) of the photoconductive layers.

Various ionic polyesters from Table I were dispersed in water at 20—25% solids and coated on the nickel coated support described in Examples 1—3 above. The dry coating thickness ranged from 6.5 μm to 7 μm.

The elements produced was evaluated for saturation potential ($V_{sat}$) and time constants ($\tau$) of dark decay using a Monroe Electrostatic Voltmeter, a strip chart recorder in conjunction with a corona charger, and a rotatable metal cylinder on which the sample was mounted. Continuous charging (positive and negative) of the sample was carried out until the voltmeter indicated no further increase in surface potential. The charger was then shut off, and the output of the voltmeter recorded as it indicated the dark decay of the surface potential of the sample. Dark decay was recorded until the potential had decreased to 1/3 of $V_{sat}$, defining the time constant of decay, $\tau$.

The results of these measurements are shown in Table III below.

TABLE III

Dark Decay and Dark Decay Properties
Of Ionic Polyester Photoconductor Films

| Example | Polymer | RH | $V_{sat}$ (volts) | $\tau$ ($V_{sat} \rightarrow$ (sec.) 1/3 $V_{sat}$) |
|---|---|---|---|---|
| 4 | 9 | 50% | +560<br>−560 | +280<br>−280 |
| 5 | 13 | 50% | +440<br>−440 | +175<br>−175 |
| 6 | 8 | 50% | +450<br>−450 | +260<br>−260 |
| 7 | 11[a] | 35% | +620<br>−580 | +900<br>−900 |
| 8 | 12[a] | 35% | +820<br>−800 | +900<br>−900 |

(a) Films dark adapted for 24 hours prior to charging.

Examples 9—13

These examples illustrate electrophotographic elements composed of conducting paper supports coated with aqueous dispersions containing an ionic polyester of the present invention. The electrical properties and photodischarge characteristics of the resulting elements are also set forth.

Polyester 12 from Table I was combined with 70°C water at 20% solids, and dispersed with a paddle stirrer. To the aqueous dispersion was added 0.5 wt/% of the following water-soluble sensitizer:

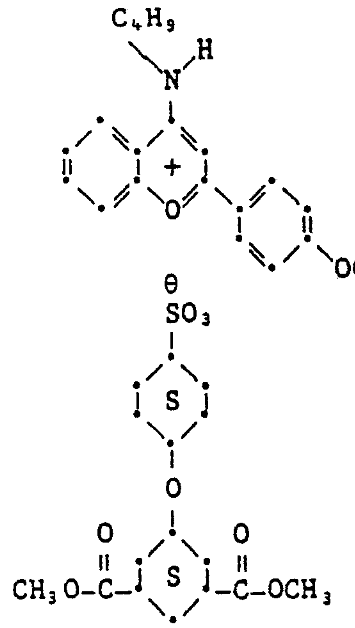

The aqueous dispersion was machine coated onto a conductive paper support. This support comprised a $TiO_2$ coated paper substrate coated on the back side with a conductive layer of a dispersed clay including a conductive clay (Bentonite® Clay, an aluminum silicate) dispersed in a poly(styrene-co-butadiene) latex. The coatings were made to produce a range of polymer coverages. The electrical properties of these photoconductive paper coatings are listed in Table IV.

TABLE IV

Dark Charging, Dark Decay and Photosensitivity of Ionic Polyester Photoconductor Coated Papers

| Examples | Dry Coverage g/m² | Thickness (μm) | $V_{sat}$ (volts) + | $V_{sat}$ (volts) − | τ (sec) + | τ ($V_{sat}$ → 1/3 $V_{sat}$) − | RH (%) | Photodischarge (+500 Volts to 250 volts) at λ = 350 nm |
|---|---|---|---|---|---|---|---|---|
| 9 | 12.5 | 14.8 | >1000 | >1000 | >1200 | >1200 | 55 | 94 ergs/cm² |
| 10 | 15.0 | 11.0 | 780 | 860 | >1200 | >1200 | 55 | 88 ergs/cm² |
| 11 | 17.0 | 13.2 | 750 | 840 | >1200 | >1200 | 55 | — |
| 12 | 19.0 | 17.0 | >1000 | 920 | >1200 | >1200 | 55 | — |
| 13 | 10.0 | 9.0 | >1000 | >1000 | >1200 | >1200 | 55 | 78 ergs/cm² |

Examples 14—17

These examples illustrate spectral sensitization of ionic polymeric photoconductors of the present invention into the visible region of the spectrum using appropriate spectral sensitizing dyes.

To separate solutions of the polyester 12 dissolved in dichloromethane (10% by weight, polyester) the following spectral sensitizing dyes were added at a concentration of 2%, by weight. The resulting solutions were coated on 0.4 O.D. nickel coated poly(ethyleneterephthalate) supports, and dried 16 hours at 60°C.

S-1

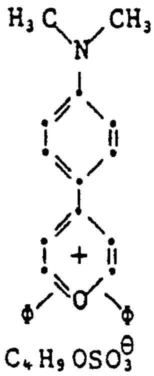

S-2

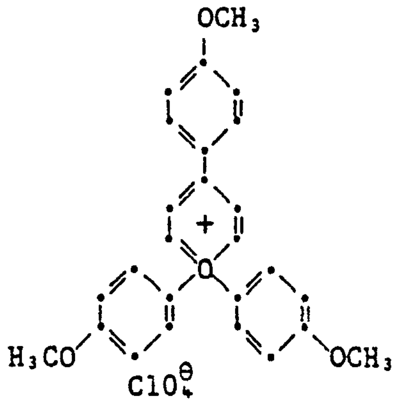

S-3

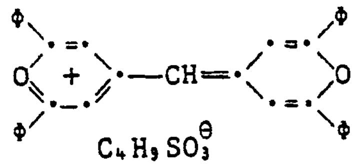

S-4

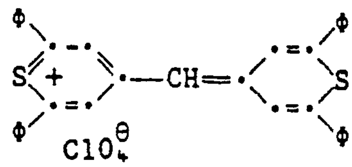

Φ = phenyl

The photodischarge characteristics in ergs/cm$^2$ of the prepared layers was determined for various wavelengths of light in the visible portion of the spectrum. Results are shown in Table V.

TABLE V
Photosensitivity of
Visibly Sensitized Ionic Polyester Photoconductors

| Examples | Dry Layer Thickness (µm) | Sensitizing Dye | Charging Potential (Vo) | Photo discharge Vo → 1/2 Vo (ergs/cm$^2$) | Wave length (nm) |
|---|---|---|---|---|---|
| 14 | 10 | S—1 | +425 | 131 | 546 |
| | | | +754 | 131 | 546 |
| | | | −233 | 626 | 546 |
| | | | −292 | 583 | 546 |
| 15 | 10 | S—2 | +483 | 92 | 430 |
| | | | +625 | 95 | 430 |
| | | | +650 | 84 | 430 |
| | | | −183 | 178 | 430 |
| | | | −258 | 167 | 430 |
| | | | −375 | 130 | 430 |
| 16 | 8 | S—3 | +483 | 59 | 565 |
| | | | +600 | 68 | 565 |
| | | | +621 | 73 | 565 |
| | | | −242 | 215 | 565 |
| | | | −525 | 137 | 565 |
| 17 | 9 | S—4 | +408 | 418 | 642 |
| | | | −433 | 1009 | 642 |
| | | | −542 | 735 | 642 |
| | | | −642 | 649 | 642 |

Example 18

This exemplifies the use of the element described in Example 9 above in a copy process to produce a toned visible image.

An electrophotographic copying device was assembled containing a grid-controlled corona charger, a vacuum platten to accept a 70 mm wide strip, an insulative glass with an attached negative test target, a tungsten lamp controlled by a timer, and an immersion liquid toner station. The element from Example 13 was charged to +500 volts, exposed for five seconds and then developed for one second using Recordak® 12N Negative Liquid Toner (available from Eastman Kodak Company, Rochester, New York). The element was also charged to +300 volts, and then exposed, and developed as above. Very sharp, well-resolved images were obtained in both cases.

**Claims**

1. An electrophotographic element comprising an electrically conducting support and a photoconductive layer in electrical contact with said support, said photoconductive layer comprising a condensation polymer containing as repeating units, the condensation residues of:

a) at least a diacid, and

b) at least an organic difunctional compound capable of undergoing condensation polymerization with said diacid,

characterized in that at least one of said residues contains an appended arylamine photoconductor group.

2. An electrophotographic element according to Claim 1 characterized in that said arylamine is a triarylamine.

3. An electrophotographic element according to Claim 1 characterized in that said condensation polymer is ionic and contains, as repeating units, the condensation residues of:

a) a first diacid,

b) a second diacid containing an anionic iminodisulfonyl or sulfo group, and

c) at least one organic difunctional compound capable of undergoing condensation polymerization with said first and second diacids,

wherein at least one of said first diacid and organic difunctional compound residues contains said appended arylamine photoconductor group.

4. An electrophotographic element according to Claim 3 characterized in that said arylamine is a triarylamine.

5. An electrophotographic element according to Claim 1 characterized in that said polymer has the structure

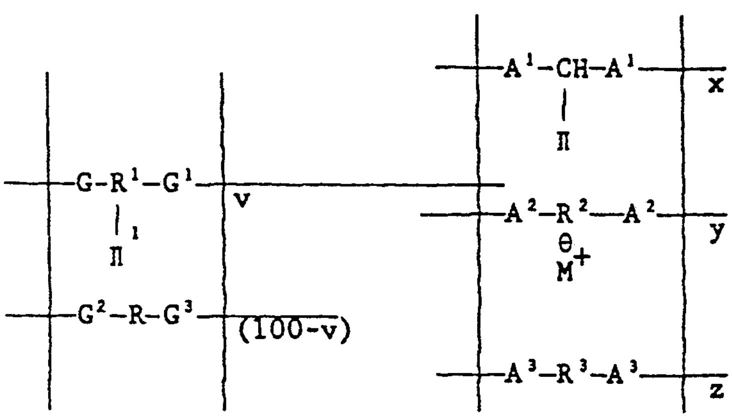

wherein Π and $Π^1$, which are the same or different, are organic groups containing an arylamine which confers photoconductivity upon the polymer; $R^1$—$Π^1$ together with G and $G^1$ represents an arylamine-containing organic condensation residue of a difunctional compound capable of undergoing condensation with organic diacids; R together with $G^2$ and $G^3$ represents at least one organic condensation residue of a

difunctional compound capable of undergoing condensation with organic diacids; G and $G^1$, which are the same or different, and $G^2$ and $G^3$, which are the same or different, represent —O— or —NH—; $A^1$, $A^2$ and $A^3$, which are the same or different, represent the condensation residues of acid groups; $R^{2\theta}$ is an organic group which contains an anionic iminodisulfonyl or sulfo group; $M^+$ is a cation; —$A^3$—$R^3$—$A^3$ represents an organic diacid condensation residue; x is 0 to 100 mole percent of the total diacid content; y is 0 to about 35 mole percent of the total diacid content; z is 0 to 100 mole percent of the total diacid content; the sum of x, y and z is 100; v is 0 to 100 mole percent of the total difunctional compound content; and v + x is at least 20.

6. An electrophotographic element according to Claim 5 characterized in that Π and $Π^1$ have the structure

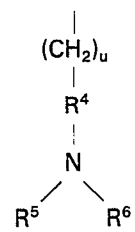

wherein u is an integer from 1 to 6; $R^5$ and $R^6$ are the same or different and represent alkyl, cycloalkyl, aryl or aralkyl; $R^4$ is alkylene, cycloalkylene, arylene or arylenealkylene; at least one of $R^4$, $R^5$ and $R^6$ comprises an aromatic group appended to the nitrogen atom; $R^3$ is an alkylene, arylene, arylenealkylene, cycloalkylene, arylenecarbonylarylene, arylenesulfonylarylene, heterocyclic or an ethylenically unsaturated group; $R^1$ is a $Π^1$ substituted organic radical having from 2 to 40 carbon atoms and represents a straight or branched chain alkylene, cycloalkylene, arylene or hydrocarbon-oxy-hydrocarbon radical; R is an organic radical having from 2 to 40 carbon atoms and represents a straight or branched chain alkylene, cycloalkylene, arylene or hydrocarbon-oxy-hydrocarbon radical; and $A^1$, $A^2$ and $A^3$ are

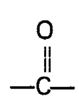 or 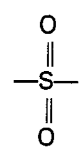

7. An electrophotographic element according to Claim 6 characterized in that $R^4$, $R^5$ and $R^6$ each comprise an aromatic group appended to the nitrogen atom.

8. An electrophotographic element according to Claim 6 characterized in that $R^4$ is phenylene, $R^5$ and $R^6$ are each phenyl or tolyl, u is 1, and v is 0.

9. An electrophotographic element according to one of Claims 5, 6, 7 or 8 wherein $R^2$ is:

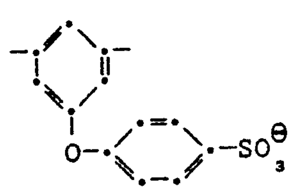

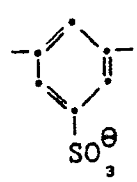

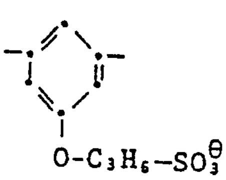

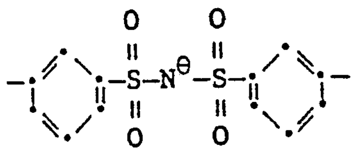

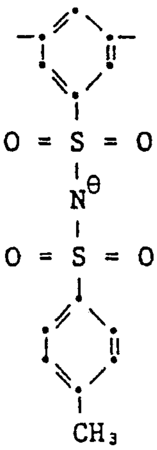

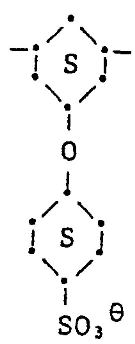

or,

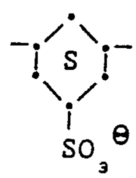

10. An electrophotographic element according to one of Claims 1 or 2 characterized in that said diacid is a dicarboxylic acid, and said organic difunctional compound is an organic diol.

11. An electrophotographic element according to Claim 3, characterized in that said first and second diacids are dicarboxylic acids, and said organic difunctional compound is an organic diol.

12. An electrophotographic element according to one of Claims 5, 6, 7, 8 or 9 characterized in that said polymer has the structure:

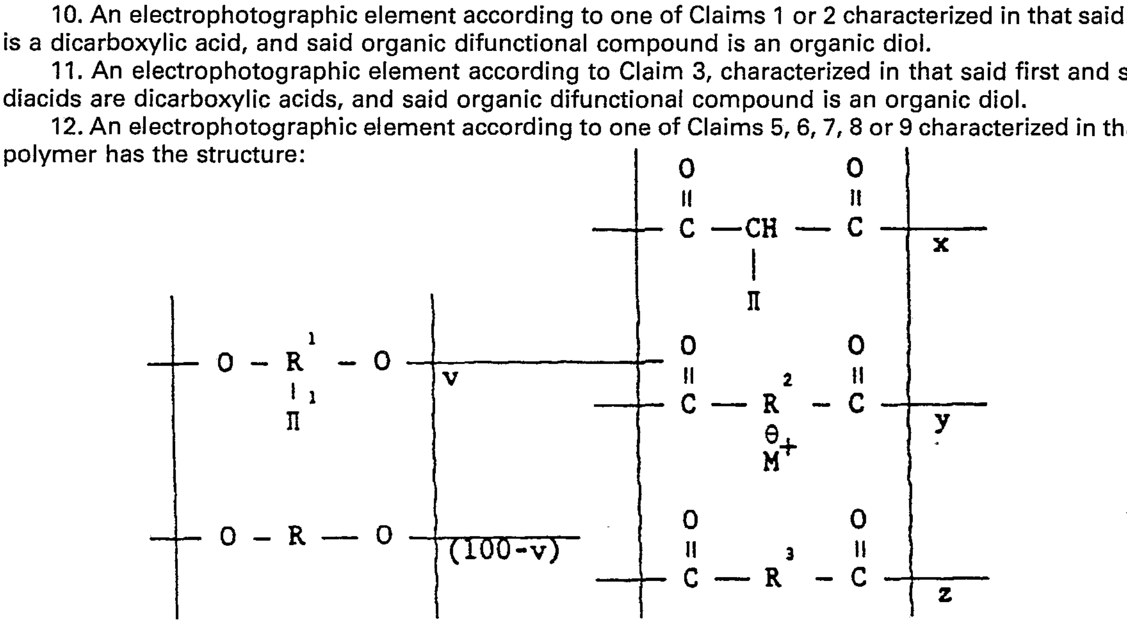

in which the symbols are as mentioned in Claim 5.

13. An electrophotographic element according to Claim 12 characterized in that v is 0, x is from 40 to 60 mole percent and y is from 10 to 30 mole percent.

**Patentansprüche**

1. Elektrophotographisches Element mit einem elektrisch leitenden Träger und einer photoleitfähigen Schicht, die sich in elektrischem Kontakt mit dem Träger befindet, und die ein Kondensationspolymer aufweist, das als wiederkehrende Einheiten die Kondensationsreste von

a) mindestens einer Disäure und

b) mindestens einer organischen difunktionellen Verbindung, die mit der Disäure zu einer Kondensations-Polymerisation befähigt ist,

enthält, dadurch gekennzeichnet, daß mindestens einer der Reste eine angehängte Arylamin-Photoleitergruppe enthält.

2. Elektrophotographisches Element nach Anspruch 1, dadurch gekennzeichnet, daß das Arylamin ein Triarylamin ist.

3. Elektrophotographisches Element nach Anspruch 1, dadurch gekennzeichnet, daß das Kondensationspolymer ionisch ist und als wiederkehrende Einheiten die Kondensationsreste von

a) einer ersten Disäure,

b) einer zweiten Disäure mit einer anionischen Iminodisulfonyl- oder Sulfogruppe und

c) mindestens einer organischen difunktionellen Verbindung, die mit der ersten und zweiten Säure zu einer Kondensations-Polymerisation befähigt ist,

enthält, wobei mindestens einer der Reste von der ersten Disäure und der organischen difunktionellen Verbindung die angehängte Arylamin-Photoleitergruppe enthält.

4. Elektrophotographiches Element nach Anspruch 3, dadurch gekennzeichnet, daß das Arylamin ein Triarylamin ist.

5. Elektrophotographische Element nach Anspruch 1, dadurch gekennzeichnet, daß das Polymer die folgende Struktur aufweist:

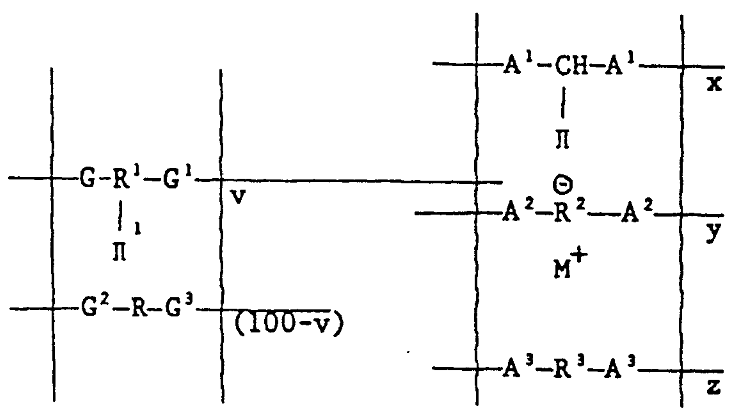

in der bedeuten: Π und Π$^1$, die gleich oder verschieden sein können, organische Gruppen mit einem Arylamin, das dem Polymer Photoleitfähigkeit verleiht; R$^1$—Π$^1$ gemeinsam mit G und G$^1$ einen Arylamin enthaltenden organischen Kondensationsrest einer difunktionellen Verbindung, die mit organischen Disäuren zu einer Kondensation befähigt ist; R gemeinsam mit G$^2$ und G$^3$ mindestens einen organischen Kondensationsrest einer difunktionellen Verbindung, die mit organischen Disäuren zu einer Kondensation befähigt ist; G und G$^1$, die gleich oder verschieden sind und G$^2$ und G$^3$, die gleich oder verschieden sind, —O— oder —NH—; A$^1$, A$^2$ und A$^3$, die gleich oder verschieden sind, die Kondensationsreste von Säuregruppen; R$^{28}$ eine organische Gruppe, die einen anionischen Iminodisulfonyl- oder Sulforest enthält; $M^+$ ein Kation; —A$^3$—R$^3$—A$^3$ einen Kondensationsrest einer organischen Disäure; x = 0 bis 100 Mol-% des gesamten Disäuregehaltes; y = 0 bis etwa 35 Mol-% des gesamten Disäuregehaltes; z = 0 bis 100 Mol-% des gesamten Disäuregehaltes, wobei die Summe von x, y und z = 100 ist, v = 0 bis 100 Mol-% des gesamten Gehaltes an difunktioneller Verbindung; und v + x mindestens 20.

6. Elektrophotographisches Element nach Anspruch 5, dadurch gekennzeichnet, daß Π und Π$^1$ der folgenden Struktur entsprechen:

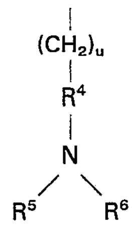

in der bedeuten: u eine Zahl von 1 bis 6; $R^5$ und $R^6$, die gleich oder verschieden sind, Alkyl, Cycloalkyl, Aryl oder Aralkyl; $R^4$ Alkylen, Cycloalkylen, Arylen oder Arylen-Alkylen, wobei mindestens einer der Reste $R^4$, $R^5$ und $R^6$ eine aromatische Gruppe ist, die an das Stickstoffatom angehängt ist; $R^3$ Alkylen, Arylen, Arylen-Alkylen, Cycloalkylen, Arylencarbonylarylen, Arylensulfonylarylen oder eine heterocyclische oder ethylenisch ungesättigte Gruppe; $R^1$ ein $\Pi^1$-substituierter organischer Rest mit 2 bis 40 Kohlenstoffatomen bestehend aus einem gerad- oder verzweigtkettigen Alkylen-, Cycloalkylen-, Arylen- oder Kohlenwasserstoff-oxy-Kohlenwasserstoffrest; R ein organischer Rest mit 2 bis 40 Kohlenenstoffatomen bestehend aus einem gerad- oder verzweigtkettigen Alkylen-, Cycloalkylen-, Arylen- oder Kohlenwasserstoff-oxy-Kohlenwasserstoffrest und $A^1$, $A^2$ und $A^3$ Reste der folgenden Formeln:

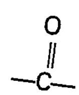 oder 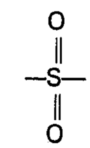

7. Elektrophotographisches Element nach Anspruch 6, dadurch gekennzeichnet, daß $R^4$, $R^5$ und $R^6$ jeweils eine aromatische Gruppe darstellen, die an dem Stickstoffatom sitzen.

8. Elektrophotographisches Element nach Anspruch 6, dadurch gekennzeichnet, daß $R^4$ für Phenylen und $R^5$ und $R^6$ jeweils für Phenyl oder Tolyl stehen und daß u = 1 und v = 0 ist.

9. Elektrophotographisches Element nach einem der Ansprüche 5, 6, 7 oder 8, in denen $R^2$ für einen der folgenden Reste steht:

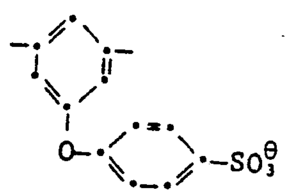

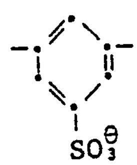

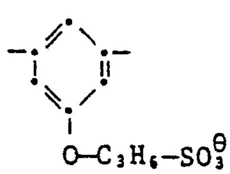

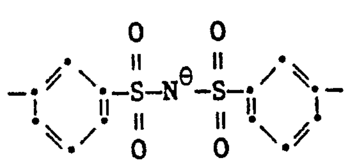

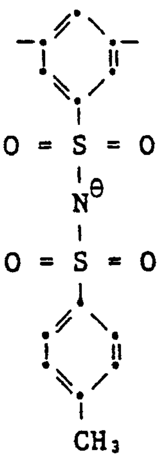

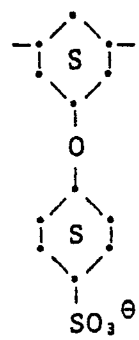

oder

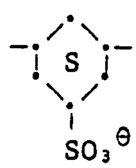

10. Elektrophotographisches Element nach einem der Ansprüche 1 oder 2, dadurch gekennzeichnet, daß die Disäure eine Dicarbonsäure und die organische difunktionelle Verbindung ein organisches Diol ist.

11. Elektrophotographisches Element nach Anspruch 3, dadurch gekennzeichnet, daß die erste und die zweite Disäure Dicarbonsäuren sind und die organische difunktionelle Verbindung ein organisches Diol ist.

12. Elektrophotographisches Element nach einem der Ansprüche 5, 6, 7, 8 oder 9, dadurch gekennzeichnet, daß das Polymer der folgenden Struktur entspricht:

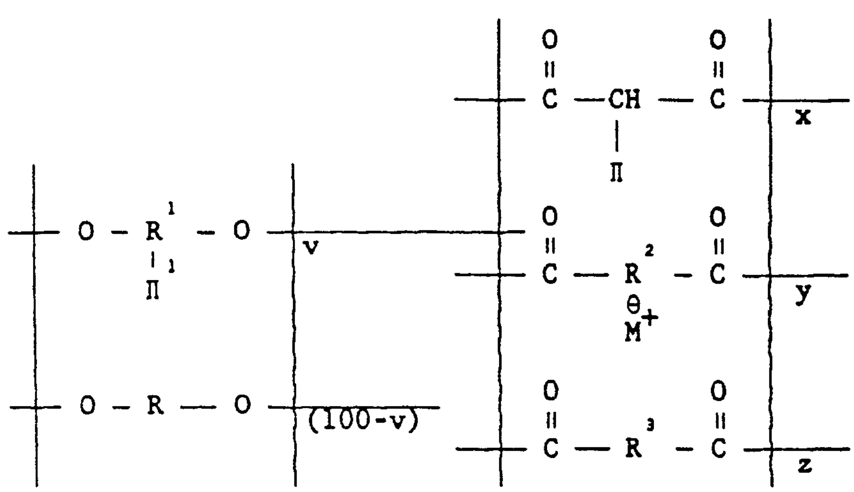

wobei die Symbole der angegebenen Strukturformel die in Anspruch 5 angegebene Bedeutung haben.

13. Elektrophotographisches Element nach Anspruch 12, dadurch gekennzeichnet, daß $v = 0$ ist und $x = 40$ bis 60 Mol-% und $y = 10$ bis 30 Mol-% bedeuten.

**Revendications**

1. Produit électrophotographique comprenant un support électriquement conducteur et une couche photoconductrice en contact électrique avec ledit support, la couche photoconductrice comprenant un polymère de condensation contenant, comme motifs, les restes de condensation de:

a) au moins un diacide,

b) au moins un composé difonctionnel organique capable de subir une polymérisation par condensation avec le diacide,

caractérisé en ce qu'au moins un des restes contient un groupe photoconducteur arylamine latéral.

2. Produit électrophotographique conforme à la revendication 1, caractérisé en ce que ladite arylamine est une triarylamine.

3. Produit électrophotographique conforme à la revendication 1, caractérisé en ce que ledit polymère de condensation est ionique et contient, comme motifs, les restes de condensation de:

a) un premier diacide,

b) un second diacide comprenant un groupe sulfo ou iminodisulfonyle anionique, et

c) au moins un groupe difonctionnel organique capable de subir une polymérisation par condensation avec les premier et second diacides, dans lequel au moins un des restes du premier diacide et du composé difonctionnel organique contient le groupe photoconducteur arylamine latéral.

4. Produit électrophotographique conforme à la revendication 3, caractérisé en ce que ladite arylamine est une triarylamine.

5. Produit électrophotographique conforme à la revendication 1, caractérisé en ce que ledit polymère a la structure:

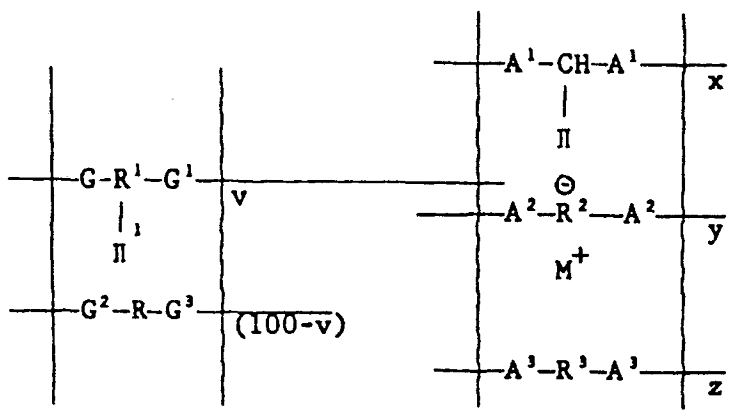

dans laquelle Π et $Π^1$, qui sont identiques ou différents, sont des groupes organiques contenant une arylamine qui confère au polymère la photoconductivité; $R^1$—$Π^1$ avec G et $G^1$ représente un reste de condensation organique, contenant une arylamine, d'un composé difonctionnel capable de subir une condensation avec des diacides organiques; R avec $G^2$ et $G^3$ représente au moins un reste de condensation organique d'un composé difonctionnel capable de subir une condensation avec des diacides organiques; G et $G^1$, qui sont identiques ou différents, et $G^2$ et $G^3$, qui sont identiques ou différents, représentent —O— ou —NH—; $A^1$, $A^2$ et $A^3$, qui sont identiques ou différents, représentent des restes de condensation de groupes acides; $R^{28}$ est un groupe organique qui contient un groupe sulfo ou iminodisulfonyle anionique; $M^+$ est un cation; —$A^3$—$R^3$—$A^3$ représente un reste de condensation d'un diacide organique; x est égal à 0 à 100% en mole de la teneur totale en diacide; y est égal à 0 à environ 35% en mole de la teneur totale en diacide; z est égal à 0 à 100% en mole de la teneur total en diacide; la somme de x, y, et z est égale à 100; v est égal à 0 à 100% en mole de la teneur totale en composé difonctionnel; et la somme $v + x$ est égale à au moins 20.

6. Produit électrophotographique conforme à la revendication 5, caractérisé en ce que Π et $Π^1$ ont la structure:

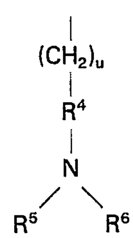

dans laquelle u est un nombre entier de 1 à 6; $R^5$ et $R^6$ sont identiques ou différents et représentent un groupe alkyle, cycloalkyle, aryle ou aralkyle; $R^4$ est un groupe alkylène, cycloalkylène, arylène ou arylènealkylène; au moins un des groupes $R^4$, $R^5$ et $R^6$ comprend un groupe aromatique relié à l'atome d'azote; $R^3$ est un groupe alkylène, arylène, arylènealkylène, cycloalkylène, arylènecarbonylarylène, arylènesulfonyl-arylène, hétérocyclique ou un groupe éthyléniquement insaturé $R^1$ est un radical organique substitué par $\Pi^1$ ayant de 2 à 40 atomes de carbone et représente un groupe alkylène à chaîne droite ou ramifiée, cycloalkylène, arylène ou un radical hydrocarbure-oxy-hydrocarbure; R est un radical organique ayant de 2 à 40 atomes de carbone et représente un groupe alkylène à chaîne droite ou ramifiée, cycloalkylène, arylène ou un radical hydrocarbure-oxy-hydrocarbure; et $A^1$, $A^2$ et $A^3$ sont:

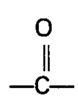 ou 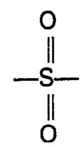

7. Produit électrophotographique conforme à la revendication 6, caractérisé en ce que $R^4$, $R^5$ et $R^6$ comprennent chacun un groupe aromatique relié à l'atome d'azote.

8. Produit électrophotographique conforme à la revendication 6, caractérisé en ce que $R^4$ est un groupe phénylène, $R^5$ et $R^6$ sont chacun un groupe phényle ou tolyle, u est égal à 1, et v est égal à 0.

9. Produit électrophotographique conforme à l'une des revendications 5, 6, 7 ou 8, dans lequel $R^2$ est:

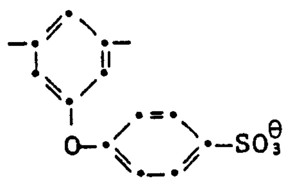

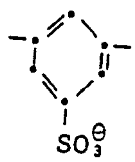

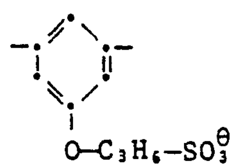

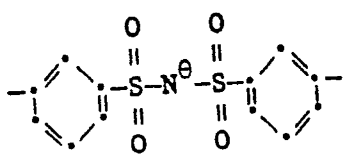

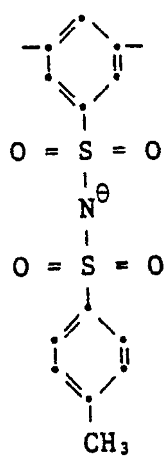

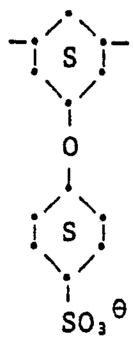

ou

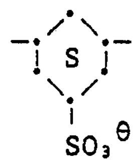

10. Produit électrophotographique conforme à l'une des revendications 1 ou 2, caractérisé en ce que la diacide est un acide dicarboxylique, et le composé difonctionnel organique est un diol organique.

11. Produit électrophotographique conforme à la revendication 3, caractérisé en ce que les premier et second diacide sont des acides dicarboxyliques, et ledit composé difonctionnel organique est un diol organique.

12. Produit électrophotographique conforme à l'une des revendication 5, 6, 7, 8 ou 9, caractérisé en ce que le polymère a la structure:

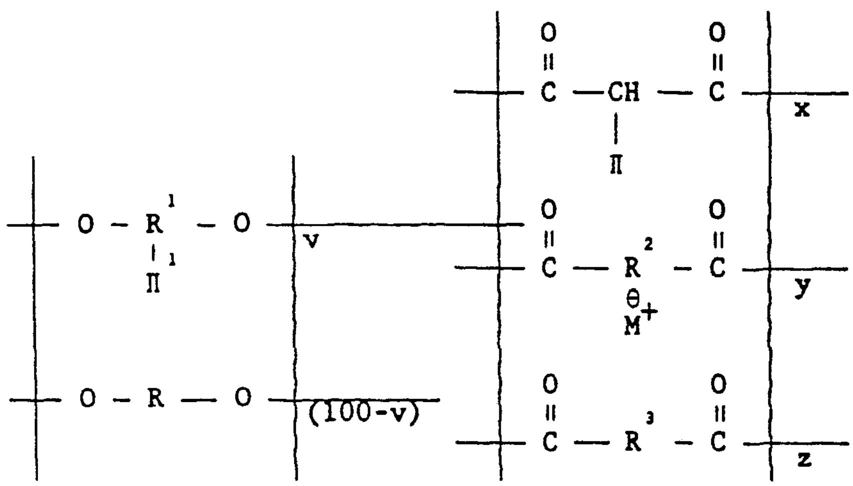

dans laquelle les symboles sont tels que décrits à la revendication 5.

13. Produit électrophotographique conforme á la revendication 12, caractérisé en ce que v est égal à 0, x est compris entre 40 et 60% en mole, et y est compris entre 10 et 30% en mole.